# EUROPÄISCHE PATENTANMELDUNG

(11) **EP 3 023 157 A1**
(43) Veröffentlichungstag der Anmeldung: **25.05.2016**
(21) Anmeldenummer: 14194334.0
(22) Anmeldetag: 21.11.2014
(51) Int. Cl.: B02C 15/00, B02C 25/00, H02P 1/02, H02P 1/58

(54) **Mehrfachantrieb für eine Schwerlastanwendung und Verfahren zum Betrieb eines solchen Mehrfachantriebs**

(71) Anmelder: Siemens Aktiengesellschaft, 80333 München (DE)
(72) Erfinder: Kube, Andreas, 52078 Aachen (DE)

(57) **Zusammenfassung**

Angegeben werden ein Mehrfachantrieb (10) für eine Schwerlastanwendung sowie ein Verfahren zum Betrieb eines solchen Mehrfachantriebs (10), wobei der Mehrfachantrieb (10) eine Mehrzahl von Antriebssträngen (12) umfasst und wobei beim Anfahren der Schwerlastanwendung sukzessive einzelne Antriebsstränge (12) aktivierbar sind bzw. aktiviert werden.

## Beschreibung

Die Erfindung betrifft einen Mehrfachantrieb für eine Schwerlastanwendung, also zum Beispiel einen Mehrfachantrieb für eine Vertikalmühle zur Zementproduktion oder dergleichen, sowie ein Verfahren zum Betrieb eines solchen Mehrfachantriebs.

Bei Antrieben für Vertikalmühlen ohne Frequenzumrichter werden Anfahrhilfen für den Anfahrvorgang eingesetzt. Unter Anfahrhilfen sind hier zum Beispiel Flüssigkeitsanlasser, Softstarter und auch Strömungskupplungen zu verstehen. Solche Anfahrhilfen haben die Aufgabe, das erzeugte Anfahrmoment sowie den auftretenden Anfahrstrom auf ein erwünschtes Maß zu bringen. Der Anfahrvorgang stellt eine besondere Belastung des Antriebs dar, die sich u.a. in einer starken Erwärmung von Antriebskomponenten wie zum Beispiel einem Anlasser oder einer Strömungskupplung äußert. Häufig muss eine unerwünschte Abkühlzeit in Kauf genommen werden, wenn es mehrerer Anfahrversuche bedarf oder die betroffenen Antriebskomponenten aus anderen Gründen erhitzt sind.

Eine Aufgabe der vorliegenden Erfindung besteht entsprechend darin, einen Antrieb für eine Schwerlastanwendung, insbesondere eine Schwerlastanwendung in Form einer Vertikalmühle, und ein Verfahren zum Betrieb eines solchen Antriebs anzugeben, bei dem solche Wartezeiten vermieden werden oder zumindest deutlich reduziert sind.

Diese Aufgabe wird erfindungsgemäß hinsichtlich des Antriebs mittels eines Mehrfachantriebs mit den Merkmalen des unabhängigen Vorrichtungsanspruchs und hinsichtlich eines korrespondierenden Verfahrens zum Betrieb eines solchen Antriebs mit den Merkmalen des parallelen, unabhängigen Verfahrensanspruchs gelöst.

Bei dem hier vorgeschlagenen und als Antrieb für eine Schwerlastanwendung fungierenden Mehrfachantrieb, insbesondere einem Mehrfachantrieb für eine Vertikalmühle, wobei der Mehrfachantrieb eine Mehrzahl von Antriebssträngen umfasst, ist vorgesehen, dass beim Anfahren der Schwerlastanwendung/der Vertikalmühle sukzessive einzelne Antriebsstränge automatisch im Rahmen einer vorgegebenen Aktivierungsstrategie aktivierbar, insbesondere aktivierbar und deaktivierbar, sind.

Bei dem korrespondierenden Verfahren zum Betrieb eines als Antrieb für eine Schwerlastanwendung, insbesondere einer Vertikalmühle wie sie von der Zementindustrie eingesetzt wird oder zum dortigen Einsatz in Betracht kommt, fungierenden und eine Mehrzahl von Antriebssträngen umfassenden Mehrfachantriebs ist vorgesehen, dass beim Anfahren der Schwerlastanwendung sukzessive einzelne Antriebsstränge automatisch im Rahmen einer vorgegebenen Aktivierungsstrategie aktiviert werden, insbesondere dass beim Anfahren einzelne Antriebsstränge aktiviert und andere Antriebsstränge deaktiviert und/oder beim Betrieb einzelne Antriebsstränge deaktiviert und dafür andere Antriebsstränge aktiviert werden.

Ein Vorteil der Verwendung eines Mehrfachantriebs und der sukzessiven Aktivierung/Aktivierbarkeit der davon umfassten Antriebsstränge besteht vor allem darin, dass der beim Anfahren der Schwerlastanwendung aufgrund der sukzessiven Aktivierung der Antriebsstränge resultierende Anfahrstrom deutlich unter einem Anfahrstrom verbleibt, wie er sich bei Verwendung eines einzelnen Antriebs oder einer gleichzeitigen Aktivierung aller Antriebsstränge eines Mehrfachantriebs ergeben würde. Zudem ist ein Mehrfachantrieb mit einer Mehrzahl von Antriebssträngen mit jeweils einem Motor und ohne vorgeschaltete Umrichter im Gegensatz zu einem "großen" Einzelantrieb mit einem vorgeschalteten Umrichter oder einem Mehrfachantrieb mit jeweils vorgeschalteten Umrichtern bei den für Schwerlastanwendungen erforderlichen Leistungsbereichen deutlich kostengünstiger.

Die oben genannte Aufgabe wird auch mittels einer Steuerungseinrichtung zur Ansteuerung eines Mehrfachantriebs einer Schwerlastanwendung gelöst, die nach dem hier und im Folgenden beschriebenen Verfahren arbeitet und dazu Mittel zur Durchführung des Verfahrens umfasst. Die Steuerungseinrichtung umfasst demnach eine Implementation der jeweiligen Aktivierungsstrategie und fungiert als Mittel zur Anwendung der Aktivierungsstrategie und damit als Mittel zur automatischen sukzessiven Aktivierung einzelner Antriebsstränge oder mehrerer Antriebsstränge beim Anfahren der jeweiligen Schwerlastanwendung. Die Erfindung ist dabei bevorzugt in Software implementiert. Die Erfindung ist damit einerseits auch ein Computerprogramm, nämlich ein mittels der Steuerungseinrichtung ausführbares/ausgeführtes Steuerungsprogramm, mit durch einen Computer ausführbaren Programmcodeanweisungen und andererseits ein Speichermedium mit einem derartigen Computer-/ Steuerungsprogramm, also ein Computerprogrammprodukt mit Programmcodemitteln. Die Erfindung ist damit auch eine Steuerungseinrichtung oder ein Antriebssystem, in deren bzw. dessen Speicher als Mittel zur Durchführung des Verfahrens und seiner Ausgestaltungen ein solches Computerprogramm geladen oder ladbar ist.

Das Steuerungsprogramm ist eine Implementierung des gegenständlichen Verfahrens in Software. Anstelle eines Steuerungsprogramms mit einzelnen Programmcodeanweisungen kann die Implementierung des hier und im Folgenden beschriebenen Verfahrens auch in Form von Firmware erfolgen. Dem Fachmann ist klar, dass anstelle einer Implementation eines Verfahrens in Software stets auch eine Implementation in Firmware oder in Firm- und Software oder in Firm- und Hardware möglich ist. Daher soll für die hier vorgelegte Beschreibung gelten, dass von dem Begriff Software oder den Begriffen Steuerungsprogramm und Computerprogramm auch andere Implementationsmöglichkeiten, nämlich insbesondere eine Implementation in Firmware oder in Firm- und Software oder in Firm- und Hardware, umfasst sind.

Die Erfindung ist damit schließlich auch eine Schwerlastanwendung, insbesondere eine Schwerlastanwendung in Form einer Vertikalmühle, mit einem Mehrfachantrieb und mit davon umfassten und beim Anfahren der Schwerlastanwendung sukzessive einzeln oder in Gruppen aktivierbaren Antriebssträngen sowie einer Steuerungseinrichtung der oben beschriebenen Art.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist. Schließlich ist darauf hinzuweisen, dass der Mehrfachantrieb auch entsprechend der abhängigen Verfahrensansprüche weitergebildet sein kann, etwas indem der Mehrfachantrieb oder eine für dessen Ansteuerung vorgesehene Steuerungseinrichtung Mittel zum Ausführen der jeweiligen Verfahrensschritte umfasst, und umgekehrt.

Bei einer Ausführungsform des Mehrfachantriebs ist vorgesehen, dass die Antriebsstränge zwar einen Motor, aber keinen vorgeschalteten und beim Betrieb des Mehrfachantriebs dauerhaft wirksamen Umrichter (Betriebsumrichter) umfassen. Bei einem solchen Mehrfachantrieb, der gerade ohne teure Umrichter auskommt, und der bei einer gleichzeitigen Aktivierung sämtlicher Antriebsstränge zu einer erheblichen Belastung des speisenden Netzes führen würde, ist die sukzessive automatische Aktivierung einzelner Antriebsstränge oder einzelner Gruppen von Antriebssträngen im Rahmen einer vorgegebenen Aktivierungsstrategie besonders sinnvoll.

Bei einer weiteren Ausführungsform des Mehrfachantriebs ist vorgesehen, dass die Antriebsstränge einen Motor und eine Kupplung, nämlich eine Kupplung in Form einer Strömungskupplung, umfassen. Eine Strömungskupplung bietet den Vorteil, dass der jeweilige Motor in kurzer Zeit auf Nenndrehzahl beschleunigen kann, ohne dass die angetriebene Schwerlastanwendung gleichermaßen mitbeschleunigt, denn die Strömungskupplung erlaubt bekanntlich Schlupf.

Bei einer weiteren Ausführungsform eines Mehrfachantriebs mit Antriebssträngen mit einer Strömungskupplung ist vorgesehen, dass ein einzelner Antriebsstrang durch Einwirken auf die Strömungskupplung aktivierbar ist. Dann wird zum Beispiel eine Aktivierungsstrategie möglich, bei der automatisch einzelne Motoren der Antriebsstränge oder Gruppen von Motoren zunächst lastfrei anlaufen und anschließend einzelne Antriebsstränge oder Gruppen von Antriebssträngen durch ein Einwirken auf deren jeweilige Strömungskupplung, nämlich durch Einwirken in Form einer Variation des Füllgrads der jeweiligen Strömungskupplung, aktiviert werden. Durch das sukzessive und zumindest zunächst lastfreie oder weitgehend lastfreie Anfahren des oder jedes zunächst im Rahmen der Anfahrstrategie gestarteten Motors bleiben der anfängliche Strombedarf im Vergleich zu einem sich bisher beim Anfahren einer Schwerlastanwendung ergebenden Strombedarf sowie die thermische Belastung der Antriebskomponenten klein. Beim gleichzeitigen Befüllen mehrerer Strömungskupplungen wird ein großes Anfahrmoment aufgebracht, wodurch das Anfahren der Schwerlastanwendung einfach gelingt und keine Komponente übermäßig belastet wird. Mit einem gezielten Befüllen bestimmter Strömungskupplungen kann die thermische Belastung aufgrund des Startvorgangs für die anderen Strömungskupplungen vermieden werden.

Bei einer Ausführungsform des Verfahrens wird beim Anfahren der Schwerlastanwendung im Rahmen der sukzessiven Aktivierung einzelner Antriebsstränge zunächst nur einer der Antriebsstränge oder eine Gruppe von Antriebssträngen aktiviert und die Schwerlastanwendung mittels des einen aktivierten Antriebsstrangs oder der aktivierten Gruppe von Antriebssträngen auf eine vorgegebene oder vorgebbare Drehzahl, zum Beispiel eine Leerlaufdrehzahl, gebracht. Bei Erreichen der jeweiligen Drehzahl (Anfangsdrehzahl) werden alle Antriebsstränge oder weitere Antriebsstränge aktiviert. Die anfängliche Aktivierung genau eines Antriebsstrangs oder einer Gruppe von Antriebssträngen begrenzt den anfänglichen Anfahrstrom. Für den Fall, dass ein erneutes Anfahren der Schwerlastanwendung notwendig sein sollte, kann beim nächsten Anfahrvorgang aus den von dem Mehrfachantrieb umfassten Antriebssträngen ein anderer Antriebsstrang oder eine andere Gruppe von Antriebssträngen für die anfängliche Aktivierung ausgewählt werden. Dies führt dazu, dass ein beim vorangehenden Anfahrvorgang verwendeter und dabei warm gewordener Antriebsstrang beim nächstfolgenden Anfahrvorgang nicht erneut verwendet oder zumindest von einem beim vorangehenden Anfahrvorgang nicht verwendeten Antriebsstrang unterstützt wird.

Anstelle von Formulierungen wie "Antriebsstrang oder eine Gruppe von Antriebssträngen" wird hier und im Folgenden, allerdings ohne Verzicht auf eine weitergehende Allgemeingültigkeit, oftmals auch nur auf einen Antriebsstrang Bezug genommen. Dies basiert auf dem der weiteren Beschreibung zugrunde gelegten Verständnis, dass der Begriff "Antriebsstrang" zumindest zum Teil auch eine Gruppierung der von dem Mehrfachantrieb umfassten Aggregate beschreibt, wobei es hinsichtlich der hier beschriebenen Funktionalität gleichgültig ist, ob der Begriff Antriebsstrang genau einen Motor mit oder ohne nachgeschaltetem Getriebe oder mehrere Motoren jeweils mit oder ohne nachgeschaltetem Getriebe bezeichnet.

Das sukzessive Aktivieren einzelner Antriebsstränge kann dabei entsprechend einem vorgegebenen oder vorgebbaren Aktivierungsschema und einer dort definierten Aktivierungsreihenfolge oder in Abhängigkeit von einem Zustand, zum Beispiel einer Temperatur, der einzelnen Antriebsstränge erfolgen. Auch bei einem eventuell notwendigen mehrfachen Anfahren können automatisch solche Aktivierungsschemata verwendet bzw. Zustände berücksichtigt werden, etwa indem beim mehrfachen Anfahren jeweils unterschiedliche Aktivierungsschemata verwendet werden oder indem beim mehrfachen Anfahren jeweils zunächst derjenige Antriebsstrang mit der geringsten Temperatur aktiviert wird. Beim Anfahren sorgt ein derartiges sukzessives Aktivieren einzelner Antriebsstränge für eine gleichmäßige und verschleißarme Verwendung der von dem Mehrfachantrieb umfassten Antriebsstränge. Bei einem eventuell erforderlichen mehrfachen Anfahren der Schwerlastanwendung sorgt die automatische Verwendung unterschiedlicher Aktivierungsschemata oder die automatische Auswahl eines jeweils zunächst zu aktivierenden Antriebsstrangs entsprechend einem jeweiligen Zustand des Antriebsstrangs dafür, dass der neue Anfahrvorgang unmittelbar gestartet werden kann und keine Wartezeit, etwa zum Abkühlen eines Antriebsstrangs, erforderlich ist. Des Weiteren sorgt die resultierende Verwendung jeweils unterschiedlicher zuerst aktivierter Antriebsstränge ebenfalls für eine gleichmäßige und verschleißarme Verwendung der von dem Mehrfachantrieb umfassten Antriebsstränge.

Zur Auslegung der hier vorgelegten Beschreibung ist als Aktivierung eines Antriebsstrangs grundsätzlich das Bestromen eines davon umfassten Motors (Elektromotors) zu verstehen. Zusätzlich oder alternativ kommt auch in Betracht, dass zur Aktivierung eines jeweiligen Antriebsstrangs auf eine Kupplung zwischen einem von dem Antriebsstrang umfassten Motor und einem ebenfalls von dem Antriebsstrang umfassten und durch den Motor angetriebenen Getriebe eingewirkt wird. Ein derartiges Einwirken kann zum Beispiel bei einer Strömungskupplung mit einem variablen Füllgrad darin bestehen, dass der Füllgrad im Sinne einer veränderlichen Ankopplung des Motors variiert wird.

Darüber hinaus ist darauf hinzuweisen, dass der hier und im Folgenden beschriebene Mehrfachantrieb als Hauptantrieb der Schwerlastanwendung fungiert, wobei eine besonders bevorzugte Ausführungsform darin besteht, dass der Mehrfachantrieb als alleiniger Antrieb der Schwerlastanwendung fungiert und entsprechend kein Nebenantrieb oder dergleichen, zum Beispiel ein Nebenantrieb gemäß der DE 10 2007 033 256 A (dort als Zusatzantrieb bezeichnet), vorgesehen ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten oder Verfahrensschrittfolgen führen.

Es zeigen
- FIG 1: einen Mehrfachantrieb für eine Schwerlastanwendung mit einzelnen von dem Mehrfachantrieb umfassten Antriebssträngen,
- FIG 2: einen Antriebsstrang,
- FIG 3: und
- FIG 4: andere Konfigurationen eines Mehrfachantriebs gemäß FIG 1 sowie
- FIG 5: eine Steuerungseinrichtung zur Ansteuerung des Mehrfachantriebs und der davon umfassten Antriebsstränge.

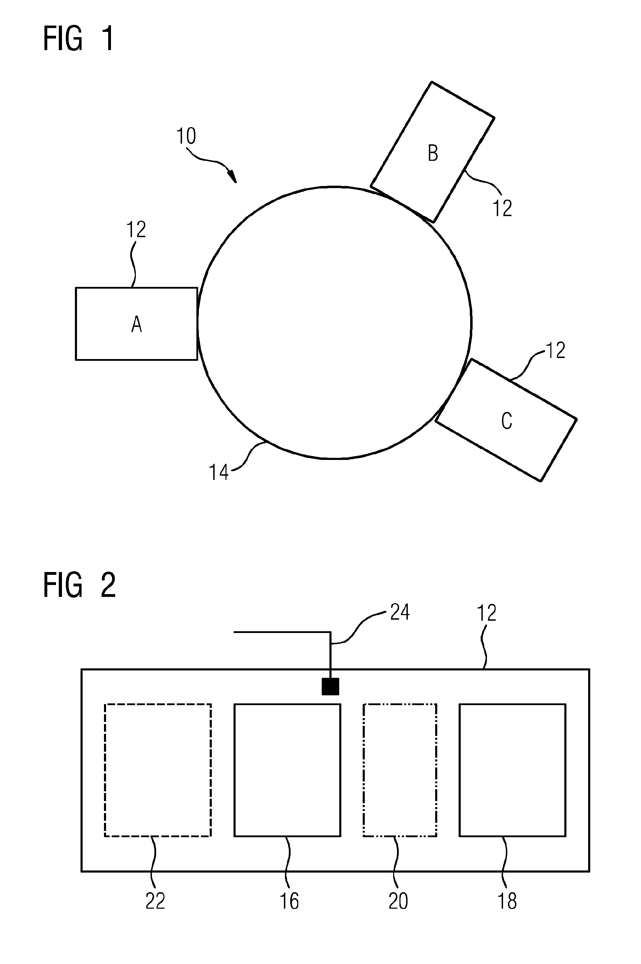

Die Darstellung in FIG 1 zeigt in schematisch stark vereinfachter Form einen Mehrfachantrieb 10 für eine Schwerlastanwendung und der Mehrfachantrieb 10 umfasst eine Mehrzahl von Antriebssträngen 12. Bei der Schwerlastanwendung handelt es sich exemplarisch um eine Vertikalmühle, von der bei der für die Darstellung gewählten Blickrichtung (Draufsicht) der mittels des Mehrfachantriebs 10 in Rotation versetzte Mahlteller 14 gezeigt ist.

Die Darstellung in FIG 2 zeigt - in ebenfalls schematisch stark vereinfachter Form -, dass jeder Antriebsstrang 12 eines Mehrfachantriebs 10 einen Motor 16, nämlich einen Elektromotor, und ein Getriebe 18 oder einen Motor 16, eine Kupplung 20 und ein Getriebe 18 umfasst. Optional ist dem Motor 16, zum Beispiel bei einem der Antriebsstränge 12 des Mehrfachantriebs 10, einzelnen Antriebssträngen 12 oder allen Antriebssträngen 12, ein grundsätzlich an sich bekannter, dauerhaft wirksamer Umrichter 22 (Betriebsumrichter) vorgeschaltet, mittels dessen dem Motor 16 zum Beispiel ein Anfahrprofil vorgegeben werden kann. Dem Antriebsstrang 12 ist optional zumindest eine Sensorik 24 in Form eines Sensors oder eine Mehrzahl von Sensoren zugeordnet.

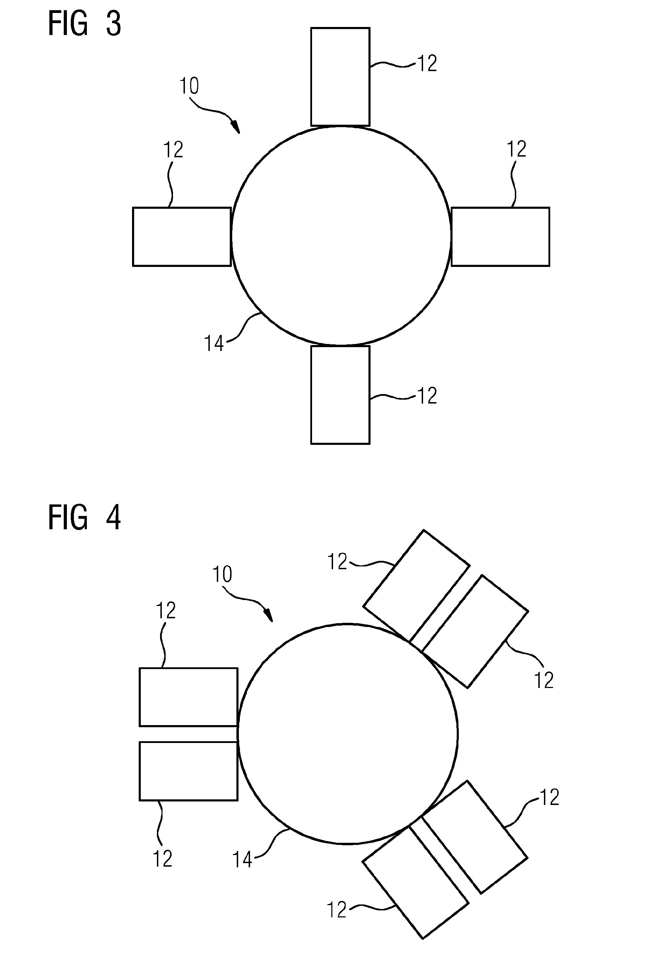

In der Darstellung in FIG 1 ist eine asymmetrische Anordnung der Antriebsstränge 12 gezeigt. Die Darstellungen in FIG 3 und FIG 4 zeigen ebenfalls einen Mehrfachantrieb 10 für eine Schwerlastanwendung, nämlich exemplarisch für eine Schwerlastanwendung in Form einer Vertikalmühle. Die in FIG 3 gezeigte Anordnung der Antriebsstränge 12 wird als symmetrische Anordnung bezeichnet. Die in FIG 4 gezeigte Anordnung wird als parallele Anordnung der Antriebsstränge 12 bezeichnet.

Jeder Antriebsstrang 12 ist selbstverständlich in geeigneter Art und Weise an die Schwerlastanwendung, hier den Mahlteller 14, angekoppelt, zum Beispiel indem jeweils ein abtriebsseitiges Zahnrad des Getriebes 18 (FIG 2) des Antriebsstrangs 12 in einen entlang der Außenumfangslinie des Mahltellers 14 umlaufenden Zahnkranz (nicht gezeigt) eingreift. Schwerlastanwendungen, wie zum Beispiel eine Vertikalmühle, können grundsätzlich mittels eines einzelnen Elektromotors mit oder ohne einen vorgeschalteten Frequenzumrichter angetrieben werden. Die Verwendung eines Frequenzumrichters erlaubt in an sich bekannter Art und Weise die Verwendung einer Frequenzrampe zum Anlauf ohne starke Überstromspitzen zu erzeugen und ohne unerwünscht hohe oder niedrige Drehmomente zu erzeugen. Die Verwendung eines Elektromotors ohne vorgeschalteten Frequenzumrichter führt dagegen bekanntlich aufgrund des dann erforderlichen Anfahrstroms zu einer erheblichen Belastung des speisenden Netzes oder es ist sogar möglich, dass der Energieversorger den erforderlichen Anfahrstrom gar nicht zur Verfügung stellen kann. Die Verwendung eines Frequenzumrichters oder sonstiger strombegrenzender Funktionseinheiten (z.B. Softstarter, Anfahrwiderstände und dergleichen) reduziert den Anfahrstrom, vermeidet die ansonsten resultierende Belastung des speisenden Netzes und gewährleistet, dass der jeweils benötigte Anfahrstrom normalerweise auch zur Verfügung gestellt werden kann. Allerdings ist ein Frequenzumrichter, speziell ein Frequenzumrichter für Leistungsbereiche, wie sie bei Schwerlastanwendungen erforderlich sind, sehr teuer. Um auf einen Frequenzumrichter verzichten zu können, wird daher bei Antrieben für Schwerlastanwendungen ohne Frequenzumrichter für den Anfahrvorgang ein spezieller Anlasser (z.B. Softstarter oder Flüssigkeitsanlasser) verwendet. Ein solcher Anlasser bringt aber seinerseits neue Einschränkungen mit sich, zum Beispiel dass er erhitzt oder nur ein geringes Anfahrmoment erzeugen kann. Im Falle einer Erhitzung kann nicht mehrfach nacheinander angefahren werden. Wenn es also beim Anfahren der Schwerlastanwendung mehrerer Anfahrvorgänge bedarf, muss jeweils abgewartet werden, bis der Anlasser wieder verwendbar ist. Daraus resultieren unerwünschte und kostenträchtige Wartezeiten. Im Falle eines geringen Anfahrmomentes kann es sein, dass der Anfahrvorgang gar nicht möglich ist.

Daher wird hier die Verwendung eines Mehrfachantriebs 10, zum Beispiel in einer der in den FIGen 1, 2 und 4 gezeigten Konfiguration, als Antrieb der Schwerlastanwendung vorgeschlagen. Zum Vermeiden hoher Anfahrströme beim Anfahren der jeweiligen Schwerlastanwendung mittels eines Mehrfachantriebs 10 ist vorgesehen, dass beim Anfahren der Schwerlastanwendung sukzessive einzelne Antriebsstränge 12 aktivierbar sind und dass beim Anfahren der Schwerlastanwendung sukzessive einzelne Antriebsstränge 12 aktiviert werden.

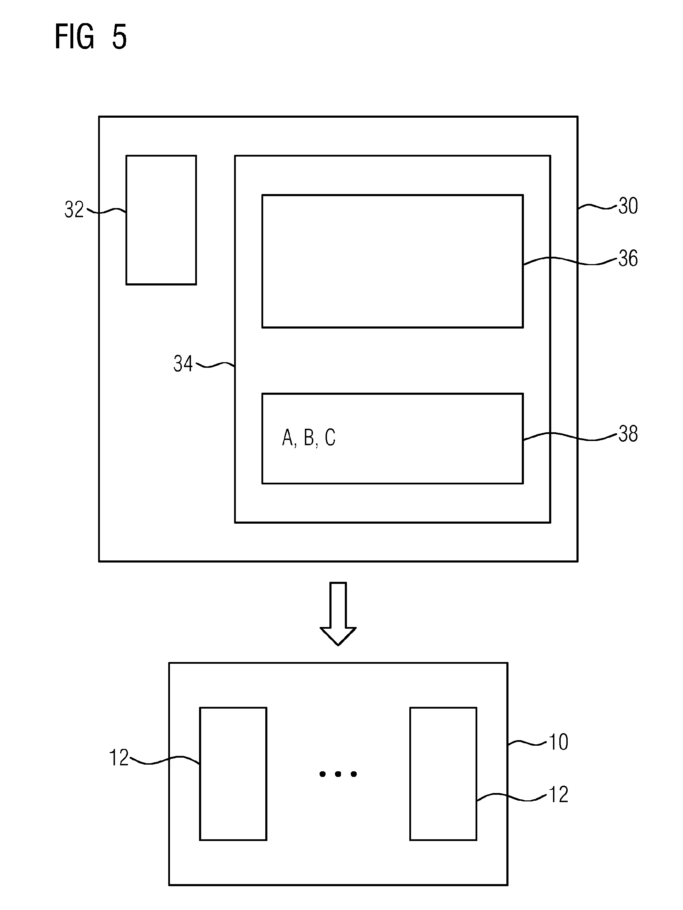

Zum sukzessiven Aktivieren einzelner oder mehrerer Antriebsstränge 12 kommen grundsätzlich unterschiedliche, aber grundsätzlich auch kombinierbare Aktivierungsstrategien in Betracht. Dafür ist eine schematisch vereinfacht in FIG 5 dargestellte Steuerungseinrichtung 30 vorgesehen, die zur mittelbaren oder unmittelbaren Ansteuerung des Mehrfachantriebs 10 und zur Aktivierung der davon umfassten Antriebsstränge 12 bestimmt und eingerichtet ist.

Die Steuerungseinrichtung 30 umfasst in an sich bekannter Art und Weise zum Beispiel eine Verarbeitungseinheit 32 in Form von oder nach Art eines Mikroprozessors sowie einen Speicher 34, in den ein Steuerungsprogramm 36 ladbar und beim Betrieb der Steuerungseinrichtung 30 geladen ist. Die Steuerungseinrichtung 30 und das Steuerungsprogramm 36 sind Mittel zur Ausführung/Anwendung der im Folgenden beschriebenen Aktivierungsstrategien. Jeder Verfahrensschritt wird automatisch durch die Steuerungseinrichtung 30 und unter Kontrolle des Steuerungsprogramms 36 ausgeführt, auch wenn darauf im Folgenden nicht jeweils hingewiesen wird.

Eine erste Aktivierungsstrategie zur sukzessiven Aktivierung einzelner Antriebsstränge 12 besteht darin, dass unter Kontrolle des Steuerungsprogramms 36 beim Anfahren der Schwerlastanwendung zunächst nur einer der Antriebsstränge 12 aktiviert wird. Der jeweils zu aktivierende Antriebsstrang 12 ist durch die Aktivierungsstrategie vorgegeben oder vorgebbar. Mittels des einen aktivierten Antriebsstrangs 12 wird die Schwerlastanwendung auf eine vorgegebene oder vorgebbare Drehzahl, zum Beispiel eine Leerlaufdrehzahl, gebracht und bei Erreichen der jeweiligen Drehzahl - im Folgenden kurz als Anfangsdrehzahl bezeichnet - werden gemäß der ersten Aktivierungsstrategie alle Antriebsstränge 12 oder weitere Antriebsstränge 12 aktiviert. Alternativ oder zusätzlich kann auch der Stromfluss zum jeweils aktivierten Antriebsstrang 12 betrachtet werden. Bekanntlich nimmt der Anlaufstrom speziell bei als Käfigläufer ausgeführten Motoren 16 bereits kurz vor Erreichen einer jeweiligen Nenndrehzahl stark ab. Gemäß einer auf einer Überwachung des Anlaufstroms basierenden Aktivierungsstrategie wird zunächst ein durch die Aktivierungsstrategie vorgegebener oder vorgebbarer Antriebsstrang 12 aktiviert und dessen Anlaufstrom überwacht. Wenn der überwachte Anlaufstrom einen vorgegebenen oder vorgebbaren Schwellwert unterschreitet werden gemäß der Aktivierungsstrategie alle Antriebsstränge 12 oder weitere Antriebsstränge 12 aktiviert.

Eine zweite Aktivierungsstrategie besteht darin, dass das sukzessive Aktivieren einzelner oder mehrerer Antriebsstränge 12 nach einem vorgegebenen oder vorgebbaren Aktivierungsschema 38 erfolgt. Dazu ist zum Beispiel jedem Antriebsstrang 12 eine Nummer oder ein sonstiges Ordnungskriterium zugewiesen (in der Darstellung in FIG 1 symbolisch als "A", "B" und "C" gezeigt). Das Aktivierungsschema 38 (in der Darstellung in FIG 5 symbolisch als "A, B, C" gezeigt) ist im Speicher 34 der Steuerungseinrichtung 30 oder in einer sonst geeigneten und für die Steuerungseinrichtung 30 erreichbaren Art und Weise gespeichert. Die Verwendung des Aktivierungsschemas 38 durch die Steuerungseinrichtung 30 und unter Kontrolle des Steuerungsprogramms 36 bewirkt, dass zunächst derjenige Antriebsstrang 12 aktiviert wird, dem das in dem Aktivierungsschema 38 zuerst genannte Ordnungskriterium zugeordnet ist, im gezeigten Beispiel also der Antriebsstrang 12 mit dem Ordnungskriterium "A". Anschließend wird derjenige Antriebsstrang 12 aktiviert (anstelle des bisher aktivierten Antriebsstrangs 12 oder zusätzlich zu dem bisher aktivierten Antriebsstrang 12), dem das in dem Aktivierungsschema 38 an zweiter Stelle genannte Ordnungskriterium zugeordnet ist, und so weiter, bis schließlich alle Antriebsstränge 12 des Mehrfachantriebs 10 aktiviert sind.

Das Aktivierungsschema 38 kann zum Beispiel - bei einem Mehrfachantrieb 10 mit drei Antriebssträngen - auch in der folgenden Form definiert sein: ["A--", "-B-", "A-C", "ABC"]. Dies soll ein Aktivierungsschema 38 darstellen, bei dem zunächst einer der Antriebsstränge 12 ("A") aktiviert wird, bei dem anschließend anstelle des zuerst aktivierten Antriebsstrangs 12 ("A") ein anderer Antriebsstrang 12 ("B") aktiviert wird, bei dem anschließend wieder der zuerst aktivierte Antriebsstrang 12 ("A") zusammen mit einem bisher noch nicht aktivierten Antriebsstrang 12 ("C") aktiviert wird und bei dem abschließend alle Antriebsstränge 12 ("A", "B", "C") aktiviert werden.

Eine Weiterschaltung von einer Stufe des Aktivierungsschemas 38 auf eine nächstfolgende Stufe des Aktivierungsschemas 38 erfolgt zum Beispiel auf Basis einer Drehzahlerfassung. Mit dem Erreichen eines vorgegebenen oder vorgebbaren Anteils der Anfangsdrehzahl erfolgt die Umschaltung auf die nächste Stufe des Aktivierungsschemas 38. Bei einem zweistufigen Aktivierungsschema 38 ist demgemäß die erste Stufe des Aktivierungsschemas 38 zum Beispiel bis zum Erreichen von 50% der Anfangsdrehzahl aktiv und die zweite Stufe des Aktivierungsschemas 38 entsprechend bis zum Erreichen von 100% der Anfangsdrehzahl. Bei einem Aktivierungsschema 38 mit mehr als zwei Stufen gilt dies entsprechend. Die Verteilung der Anfangsdrehzahlanteile kann auch nichtlinear zunehmen, weil die anfängliche Beschleunigung der Schwerlastanwendung den größten Energieeinsatz erfordert, so dass zum Beispiel bei einem zweistufigen Aktivierungsschema 38 die erste Stufe des Aktivierungsschemas 38 bis zum Erreichen von 30% der Anfangsdrehzahl aktiv ist und die zweite Stufe des Aktivierungsschemas 38 entsprechend bis zum Erreichen von 100% der Anfangsdrehzahl aktiv ist. Zusätzlich oder alternativ kommt auch eine zeit-, temperatur- und/oder stromstärkeabhängige Weiterschaltung von einer Stufe des Aktivierungsschemas 38 auf eine nächstfolgende Stufe in Betracht.

Beim mehrfachen Anfahren der Schwerlastanwendung können optional auch jeweils unterschiedliche Aktivierungsschemata 38 verwendet werden. Dafür speichert die Steuerungseinrichtung 30 bei jedem Anfahren der Schwerlastanwendung ab, welches Aktivierungsschema 38 jeweils verwendet wurde, so dass beim nächsten Anfahren der Schwerlastanwendung ein anderes Aktivierungsschema 38 verwendet wird, zum Beispiel das in der Reihenfolge der Aktivierungsschemata 38 nächstfolgende Aktivierungsschema 38, bis nach der Verwendung des in der Reihenfolge der Aktivierungsschemata 38 letzten Aktivierungsschemas 38 wieder das erste Aktivierungsschema 38 verwendet wird. Auf diese Weise wird verhindert, dass beim Anfahren der Schwerlastanwendung immer derselbe Antriebsstrang 12 die anfängliche Beschleunigung der Schwerlastanwendung bewirken muss. Die Belastung wird also durch eine Verwendung unterschiedlicher Aktivierungsschemata 38 verteilt. Exemplarisch und auf Basis des weiter oben bereits verwendeten Beispiels können solche gewissermaßen rotierend angewandte Aktivierungsschemata 38 wie folgt angegeben werden: [ ["A--", "-B-", "A-C", "ABC"]; ["-B-", "--C", "AB-", "ABC"]; ["--C", "A--", "-BC", "ABC"] ].

Als Alternative zu einer solchen, zum Beispiel rotierenden Anwendung mehrerer Aktivierungsschemata 38 kommt auch eine "zufällige" Aktivierung der Antriebsstränge 12 in Betracht. Die zufällige Auswahl des jeweils zu aktivierenden Antriebsstrangs 12 erfolgt automatisch durch die Steuerungseinrichtung 30, zum Beispiel unter Verwendung eines sogenannten Zufallsgenerators. Wenn bei der zufälligen Auswahl ein Aktivierungsstrang 12 ausgewählt wird, dessen Temperatur (oder dessen temperaturproportionaler Messwert; siehe unten) bereits über einem vorgegebenen oder vorgebbaren Grenzwert liegt, wird der ausgewählte Antriebsstrang 12 nicht aktiviert und stattdessen zufallsbasiert ein neuer Antriebsstrang 12 ausgewählt.

Zusätzlich oder alternativ zu der Verwendung eines oder mehrerer Aktivierungsschemata 38 kann das sukzessive Aktivieren einzelner Antriebsstränge 12 auch auf Basis zumindest eines in Bezug auf zumindest einen Antriebsstrang 12 aufgenommenen Messwerts erfolgen. Bei der Erläuterung der Darstellung in FIG 2 wurde eine dort gezeigte Sensorik 24 erwähnt. Die Sensorik 24 umfasst zum Beispiel einen Temperatursensor und entsprechend liefert die Sensorik 24 einen Temperaturmesswert, zum Beispiel einen am Motor 16 aufgenommenen Temperaturmesswert. Eine jeweilige Temperatur des Antriebsstrangs 12 oder des davon umfassten Motors 16 ist ein geeignetes Kriterium für eine Umschaltung von einem Antriebsstrang 12 auf einen anderen, von dem Mehrfachantrieb 10 ebenfalls umfassten Antriebsstrang 12. Auf diese Weise wird verhindert, dass beim Anfahren der Schwerlastanwendung einer der Antriebsstränge 12 überhitzt. Neben der Verwendung eines Temperaturmesswerts oder zusätzlich zu der Verwendung eines Temperaturmesswerts kommt auch die Verwendung eines Messwerts in Betracht, der ein Maß für eine Temperatur des Antriebsstrangs 12 angibt. So kommt zum Beispiel auch in Betracht, dass mittels der Sensorik 24 ein jeweiliger Schlupf des Antriebsstrangs 12 erfasst und auf dieser Basis eine zugehörige Temperatur ermittelt wird (die Temperatur einer Strömungskupplung ist bekanntlich abhängig vom Schlupf). Solche oder ähnliche Messwerte werden im Folgenden zusammenfassend als Maß für eine Temperatur des jeweiligen Antriebsstrangs 12 oder als temperaturproportionaler Messwert bezeichnet.

Eine darauf basierende Aktivierungsstrategie sieht vor, dass für die von dem Mehrfachantrieb 10 umfassten Antriebsstränge 12 jeweils zumindest ein temperaturproportionaler Messwert aufgenommen wird und dass die beim Anfahren der Schwerlastanwendung sukzessive aktivierten Antriebsstränge 12 anhand des temperaturproportionalen Messwerts ausgewählt werden, zum Beispiel indem zunächst der Antriebsstrang 12 mit dem niedrigsten temperaturproportionalen Messwert aktiviert wird. Auf diese Weise wird gewährleistet, dass jeweils nur ein zuvor nicht oder wenig belasteter Antriebsstrang 12 aktiviert wird. Im Ergebnis werden die Belastungen der Antriebsstränge 12 im Mehrfachantrieb gleichmäßig verteilt.

Eine auf einem temperaturproportionalen Messwert basierende Aktivierungsstrategie kann auch zur Auswahl eines von mehreren Aktivierungsschemata 38 verwendet werden, zum Beispiel derart, dass ein Aktivierungsschema 38 entsprechend einem temperaturproportionalen Messwert eines in der ersten Stufe des jeweiligen Aktivierungsschemas 38 aktivierten Antriebsstrangs 12 ausgewählt wird.

Als weitere oder ergänzte Aktivierungsstrategie kann auf Basis temperaturproportionaler Messwerte mittels der Steuerungseinrichtung 30 und unter Kontrolle des Steuerungsprogramms 36 eine automatische Deaktivierung eines Antriebsstrangs 12 oder einzelner Antriebsstränge 12 und/oder eine automatische Aktivierung eines Antriebsstrangs 12 oder einzelner Antriebsstränge 12 erfolgen. Das Resultat einer solchen Aktivierungsstrategie ist zum Beispiel, dass beim Anfahren der Schwerlastanwendung zunächst derjenige Antriebsstrang 12 mit dem niedrigsten temperaturproportionalen Messwert aktiviert wird, dass beim Anfahren ein temperaturproportionaler Messwert des oder jedes bereits aktivierten Antriebsstrangs 12 überwacht wird, dass ein bereits aktivierter Antriebsstrang 12 deaktiviert wird, wenn dessen temperaturproportionaler Messwert einen vorgegebenen oder vorgebbaren Grenzwert überschreitet und dass anstelle des so deaktivierten Antriebsstrangs 12 der Antriebsstrang 12 des Mehrfachantriebs 10 mit dem niedrigsten temperaturproportionalen Messwert aktiviert wird.

Das Abschalten und Zuschalten jeweils eines Antriebsstrangs 12 anhand eines jeweils aufgenommenen temperaturproportionalen Messwerts kann auch noch nach dem Anfahren der Schwerlastanwendung, also im laufenden Betrieb, angewendet werden. Genauso kann im laufenden Betrieb zyklisch nach einem vorgegebenen oder vorgebbaren Schema jeweils ein Antriebsstrang 12 deaktiviert und an dessen Stelle ein inaktiver Antriebsstrang 12 aktiviert werden.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden ein Mehrfachantrieb 10 für eine Schwerlastanwendung sowie ein Verfahren zum Betrieb eines solchen Mehrfachantriebs 10, wobei der Mehrfachantrieb 10 eine Mehrzahl von Antriebssträngen 12 umfasst und wobei beim Anfahren der Schwerlastanwendung sukzessive einzelne Antriebsstränge 12 aktivierbar sind bzw. aktiviert werden. Beim Anfahren der Schwerlastanwendung wird im Rahmen der sukzessiven Aktivierung/Aktivierbarkeit zunächst nur einer der Antriebsstränge 12 oder eine Gruppe der Antriebsstränge 12 aktiviert, so dass eine definierte Startsequenz resultiert und der anfängliche Anfahrstrom begrenzt ist. Bei einem eventuell erforderlichen mehrfachen Anfahren der Schwerlastanwendung wird im Vergleich zu einem vorangehenden Anfahrvorgang anfänglich ein anderer Antriebsstrang 12 oder zumindest ein anderer Antriebsstrang 12 aktiviert, so dass ebenfalls eine definierte Startsequenz resultiert und ein neuer Anfahrvorgang unmittelbar oder ohne nennenswerte Wartezeit gestartet werden kann.

## Patentansprüche

1. Mehrfachantrieb (10) für eine Schwerlastanwendung, wobei der Mehrfachantrieb (10) eine Mehrzahl von Antriebssträngen (12) umfasst und wobei beim Anfahren der Schwerlastanwendung sukzessive einzelne Antriebsstränge (12) automatisch im Rahmen einer vorgegebenen Aktivierungsstrategie aktivierbar sind.

2. Mehrfachantrieb (10) nach Anspruch 1, wobei die Antriebsstränge (12) einen Motor (16) ohne vorgeschalteten Betriebsumrichter (22) umfassen.

3. Mehrfachantrieb (10) nach Anspruch 1 oder 2, wobei die Antriebsstränge (12) einen Motor (16) und eine Kupplung (20) in Form einer Strömungskupplung umfassen.

4. Verfahren zum Betrieb eines Mehrfachantriebs (10) für eine Schwerlastanwendung, wobei der Mehrfachantrieb (10) eine Mehrzahl von Antriebssträngen (12) umfasst und wobei beim Anfahren der Schwerlastanwendung sukzessive einzelne Antriebsstränge (12) automatisch im Rahmen einer vorgegebenen Aktivierungsstrategie aktiviert werden.

5. Betriebsverfahren nach Anspruch 4, wobei beim Anfahren der Schwerlastanwendung im Rahmen der sukzessiven Aktivierung einzelner Antriebsstränge (12) zunächst nur einer der Antriebsstränge (12) aktiviert wird und mittels des einen aktivierten Antriebsstrangs (12) die Schwerlastanwendung auf eine Anfangsdrehzahl, insbesondere eine Leerlaufdrehzahl, gebracht wird und wobei bei Erreichen der Anfangsdrehzahl alle Antriebsstränge (12) oder weitere Antriebsstränge (12) aktiviert werden.

6. Betriebsverfahren nach Anspruch 4 oder 5, wobei das sukzessive Aktivieren einzelner Antriebsstränge (12) entsprechend einem vorgegebenen oder vorgebbaren Aktivierungsschema (38) und einer dort definierten Aktivierungsreihenfolge erfolgt.

7. Betriebsverfahren nach Anspruch 6, wobei beim mehrfachen Anfahren der Schwerlastanwendung jeweils unterschiedliche Aktivierungsschemata (38) verwendet werden.

8. Betriebsverfahren nach einem der Ansprüche 4 bis 7, wobei für die von dem Mehrfachantrieb (10) umfassten Antriebsstränge (12) zumindest ein temperaturproportionaler Messwert aufgenommen wird und wobei die beim Anfahren der Schwerlastanwendung sukzessive aktivierten Antriebsstränge (12) anhand des temperaturproportionalen Messwerts ausgewählt werden.

9. Betriebsverfahren nach einem der Ansprüche 4 bis 8, wobei für die von dem Mehrfachantrieb (10) umfassten Antriebsstränge (12) zumindest ein temperaturproportionaler Messwert aufgenommen wird und wobei beim Hochfahren der Schwerlastanwendung einzelne zuvor aktivierte Antriebsstränge (12) in Abhängigkeit von dem temperaturproportionalen Messwert wieder deaktiviert werden.

10. Computerprogramm (36) mit Programmcodemitteln, um alle Schritte von jedem beliebigen der Ansprüche 4 bis 9 durchzuführen, wenn das Computerprogramm (36) auf einer Steuerungseinrichtung (30) zum Ansteuerung eines Mehrfachantriebs (10) für eine Schwerlastanwendung ausgeführt wird.

11. Steuerungseinrichtung (30) zum Ansteuern eines Mehrfachantriebs (10) für eine Schwerlastanwendung, wobei die Steuerungseinrichtung (30) eine Verarbeitungseinheit (32) und einen Speicher (34) umfasst und wobei in den Speicher (34) als Steuerungsprogramm (36) ein Computerprogramm nach Anspruch 10 geladen ist, das im Betrieb der Steuerungseinrichtung (30) durch die Verarbeitungseinheit (32) ausgeführt wird.

12. Vertikalmühle mit einem Mehrfachantrieb (10) nach Anspruch 1 bis 3 und einer Steuerungseinrichtung (30) nach Anspruch 11.
